# EUROPEAN PATENT APPLICATION

(11) **EP 3 147 702 A1**
(43) Date of publication of application: **29.03.2017**
(21) Application number: 15796351.3
(22) Date of filing: 21.05.2015
(51) Int. Cl.: G02B 27/22, G02F 1/13, H04N 13/00

(54) **DISPLAY DEVICE**

(30) Priority: 22.05.2014 CN 201410219413
(71) Applicant: Huawei Technologies Co. Ltd., Shenzhen, Guangdong 518129 (CN); Cambridge Enterprise Limited, Cambridge, Cambridgeshire CB2 1TN (GB)
(72) Inventor: LI, Kun, Cambridgeshire CB3 0FA (GB); ROBERTSON, Brian, Cambridgeshire CB3 0FA (GB); CHU, Daping, Cambridgeshire CB3 0FA (GB); ZHOU, Jiong, Shenzhen Guangdong 518129 (CN)
(74) Representative: Thun, Clemens
(86) International application number: PCT/CN2015/079427
(87) International publication number: WO 2015/176663

(57) **Abstract**

A display apparatus (100) includes: a display layer (130) including a pixel array, a first lens layer (110), and a second lens layer (120). The second lens layer (120) is disposed between the first lens layer (110) and the display layer (130). The first lens layer (110) includes a first lens array, where the first lens array is configured to deflect lights passing through the first lens array to different projection directions, so as to achieve stereoscopic parallax. The second lens layer (120) includes a second lens array, and the second lens array is configured to project beams, emitted from the pixel array, onto the first lens array. A structure of the display apparatus (100) can reduce impact of a phenomenon of crosstalk between pixels (131, 132, 133) of the display apparatus (100), thereby improving a resolution and a display effect of the display apparatus (100).

## Description

This application claims priority to Chinese Patent Application No. 201410219413.9, filed with the Chinese Patent Office on May 22, 2014 and entitled "DISPLAY APPARATUS", which is incorporated herein by reference in its entirety.

### TECHNICAL FIELD

Embodiments of the present invention relate to the field of display technologies, and specifically, to a display apparatus.

### BACKGROUND

At present, an auto-stereoscopic (auto-stereoscopic) display is also referred to as a naked-eye two-view display, a naked-eye three-dimensional display, or a binocular stereoscopic parallax display.

In an existing auto-stereoscopic display, each microlens covers a plurality of pixels, and generates a stereoscopic image on a central depth plane (central depth plane). When eyes of a user focus on the central depth plane, the user can see the stereoscopic image.

In addition, a three dimensional (Three Dimension, 3D) display technology may be implemented by using a phase characteristic of electrically tunable liquid crystal. For example, the electrically tunable liquid crystal may be tightly attached over an existing screen of user equipment, and forms a liquid crystal lens array by means of the phase characteristic of the liquid crystal in a powered-on case, so as to deflect beams, emitted from pixels of a display of the user equipment, to left and right to achieve naked-eye binocular parallax, thereby producing a stereoscopic effect in eyes of an observer.

Generally, an optical distance between an optical plane of the liquid crystal lens array and the pixels of the display of the user equipment is at least hundreds of micrometers, and this relatively long distance is mainly caused by a thick glass substrate of the liquid crystal lens array. The display has a relatively large display angle (for example, the display angle may be greater than 176 degrees), therefore, although strength and contrast of the display are significantly weakened when the display angle reaches ±30 degrees, a light emitted from one pixel of the display may cover more than one liquid crystal lens in the liquid crystal lens array, thereby causing a phenomenon of crosstalk (crosstalk) between adjacent pixels. The crosstalk between the adjacent pixels may greatly lower a resolution and a display effect of the display.

### SUMMARY

Embodiments of the present invention provide a display apparatus, which can reduce impact of a phenomenon of crosstalk between pixels of the display apparatus, thereby improving a resolution and a display effect of a display.

According to a first aspect, a display apparatus is provided, including: a display layer, including a pixel array; a first lens layer, including a first lens array, where the first lens array is configured to deflect lights passing through the first lens array to different projection directions, so as to achieve stereoscopic parallax; and a second lens layer, including a second lens array, where the second lens layer is disposed between the first lens layer and the display layer, and the second lens array is configured to project beams, emitted from the pixel array, onto the first lens array or within a focal length of the first lens array.

With reference to the first aspect, in a first possible implementation manner, a focal length of each second lens in the second lens array is less than a distance between the first lens array and the second lens array.

With reference to the first aspect or the first possible implementation manner, in a second possible implementation manner, the focal length of each second lens in the second lens array is greater than or equal to one half of the distance between the first lens array and the second lens array; or the focal length of each second lens in the second lens array is greater than or equal to a quarter of a distance between the first lens array and the display layer.

With reference to the first aspect or either of the foregoing possible implementation manners of the first aspect, in a third possible implementation manner, the first lens array is a liquid crystal lens array, the liquid crystal lens array includes a liquid crystal layer and transparent electrodes disposed on two sides of the liquid crystal layer, and the transparent electrodes are configured to control the liquid crystal layer to deflect lights passing through the liquid crystal lens array to different projection directions.

With reference to the first aspect or any one of foregoing possible implementation manners of the first aspect, in a fourth possible implementation manner, the pixel array includes a plurality of pixels, the first lens array includes a plurality of first lenses, the second lens array includes a plurality of second lenses, the plurality of first lenses is in a one-to-one correspondence with the plurality of pixels, and the plurality of second lenses is in a one-to-one correspondence with the plurality of pixels.

With reference to the fourth possible implementation manner, in a fifth possible implementation manner, each pixel of the plurality of pixels includes a plurality of subpixels.

With reference to the first aspect or any one of foregoing possible implementation manners of the first aspect, in a sixth possible implementation manner, the first lens layer further includes: a first transparent substrate disposed between the first lens array and the second lens layer, and the display layer further includes: a second transparent substrate disposed between the second lens layer and the pixel array.

With reference to the sixth possible implementation manner, in a seventh possible implementation manner, the second lens layer further includes a third transparent substrate, the third transparent substrate is disposed between the second lens array and the first transparent substrate, and the second lens array is disposed on a side that is of the third transparent substrate and that is opposite to the second lens layer; and the display apparatus further includes: a first spacer element, disposed between the first transparent substrate and the third transparent substrate and configured to form a gap between the first transparent substrate and the second lens layer, and a second spacer element, disposed between the second transparent substrate and the third transparent substrate and configured to form a gap between the second transparent substrate and the second lens layer.

With reference to the seventh possible implementation manner, in an eighth possible implementation manner, a thickness of the first transparent substrate is 300 micrometers, a thickness of the second lens layer is 225 micrometers, and a thickness of the second transparent substrate is 100 micrometers.

With reference to the sixth possible implementation manner, in a ninth possible implementation manner, the second lens array is disposed on a side that is of the first transparent substrate and that is opposite to the second lens layer, and the display apparatus further includes: a first spacer element, disposed between the first transparent substrate and the second transparent substrate and configured to form a gap between the second transparent substrate and the second lens layer.

With reference to the ninth possible implementation manner, in an eleventh possible implementation manner, a thickness of the first transparent substrate is 300 micrometers, and a thickness of the second transparent substrate is 300 micrometers.

With reference to the sixth possible implementation manner, in a twelfth possible implementation manner, the second lens array is a cylindrical lens array.

With reference to the twelfth possible implementation manner, in a thirteenth possible implementation manner, a thickness of the first transparent substrate is 300 micrometers, a thickness of the second lens layer is 225 micrometers, and a thickness of the second transparent substrate is 100 micrometers.

According to a second aspect, a terminal is provided, including: the display apparatus according to the first aspect.

In the foregoing technical solution, a second lens array may be disposed between a first lens array of a display apparatus and a pixel array of the display apparatus, and is configured to project lights, emitted from the pixel array, onto the first lens array, which can reduce impact of a phenomenon of crosstalk between pixels of the display apparatus, thereby improving a resolution and a display effect of a display.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a display apparatus according to an embodiment of the present invention;
FIG. 2 is a schematic structural diagram of a display apparatus according to another embodiment of the present invention;
FIG. 3 is a schematic structural diagram of a display apparatus according to another embodiment of the present invention;
FIG. 4 is a schematic structural diagram of a display apparatus according to still another embodiment of the present invention; and
FIG. 5 is a schematic structural diagram of a display apparatus according to still another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that in the embodiments of the present invention, stereoscopic imaging may refer to three-dimensional display or auto-stereoscopic display. The technical solution of the present invention may be applied to various stereoscopic imaging displays, and in particular, to stereoscopic imaging displays to which an electrically tunable liquid crystal technology is applied.

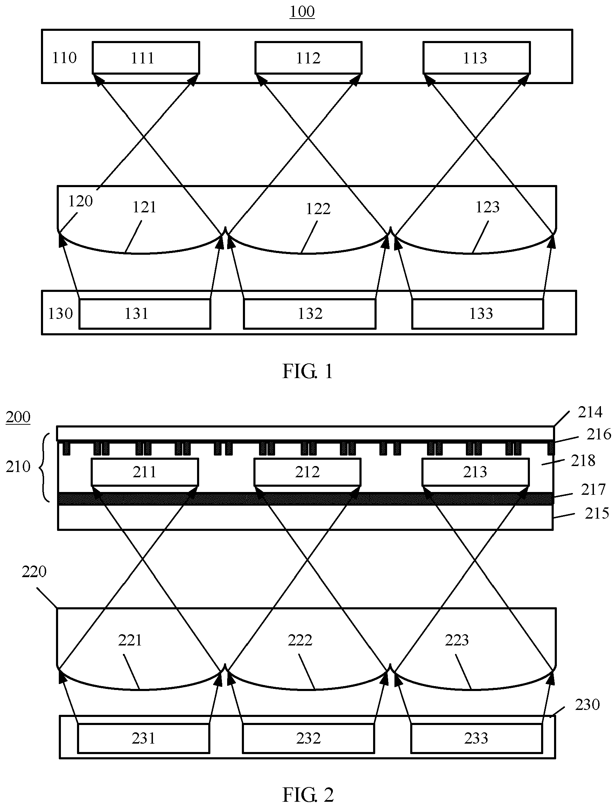

FIG. 1 is a schematic structural diagram of a display apparatus 100 according to an embodiment of the present invention. The display apparatus 100 includes a display layer 130, a first lens layer 110, and a second lens layer 120.

The display layer 130 includes a pixel array. For example, the pixel array may include pixels 131, 132, and 133. The first lens layer 110 includes a first lens array. For example, the first lens array may include first lenses 111, 112, and 113, and is configured to deflect lights passing through the first lens array to different projection directions, so as to achieve stereoscopic parallax. The second lens layer 120 includes a second lens array. The second lens array includes second lenses 121, 122, and 123, where the second lens layer 120 is disposed between the first lens layer 110 and the display layer 130, and the second lens array 121 is configured to project beams, emitted from the pixel array, onto the first lens array or within a focal length of the first lens array.

The display apparatus 100 may be an auto-stereoscopic display or a 3D imaging apparatus of another type. The display apparatus may be a display apparatus of a terminal (for example, a mobile terminal). For example, the first lens array is provided with a capacitive touchscreen and front cover glass of the terminal, and is configured to project lights, projected by the second lens, to the capacitive touchscreen and the front cover glass, so as to achieve stereoscopic parallax, thereby enabling a user of the terminal to see a stereoscopic image.

In other words, the second lens array disposed between the first lens array and the pixel array plays a role of an optical repeater, which is equivalent to that a distance between the first lens array and the pixel array is shortened. In this way, each pixel is imaged onto a position near a corresponding first lens or even on an optical plane of the corresponding first lens.

According to this embodiment of the present invention, projecting a pixel within a focal length of a first lens is equivalent to having an actual pixel within an EFL of the first lens. Because the projected pixel is very close to the first lens layer, imaging crosstalk between adjacent pixels on the first lens layer can be reduced. In other words, presence of the second lens layer decreases a distance between the pixels of the display layer and the first lens layer. This is an optical repeating (or transfer) process, that is, the pixels of the display layer are transferred to the first lens layer. In this way, each first lens receives most of a beam of a pixel corresponding to the first lens, but does not receive or seldom receives beams from adjacent pixels, thereby ensuring expected visual experience of high definition 3D. In addition, transfer of the pixels by hundreds of micrometers does not interfere with original 2D visual experience of the display apparatus.

In this embodiment of the present invention, a second lens array is disposed between a first lens array of a display apparatus and a pixel array of the display apparatus, and is configured to project light, emitted from the pixel array, onto the first lens array, which can reduce impact of a phenomenon of crosstalk between pixels of the display apparatus, thereby improving a resolution and a display effect of a display.

In addition, the optical repeating (or transfer) design allows flexible configuration of optical matching between a pixel plane and an EFL of the first lens array. For example, a size of the projected pixel may be well adjusted according to a capability of the first lens (for example, the EFL). For example, a large turning angle may be obtained by projecting a small pixel to a small first lens.

For ease of description, FIG. 1 shows only a part of the display apparatus, that is, FIG. 1 shows only three pixels, three first lenses, and three second lenses. A person skilled in the art should understand that the display apparatus may include more pixels, first lenses, and second lenses.

It should also be understood that the pixels, first lenses, and second lenses may be in a one-to-one correspondence, but this embodiment of the present invention is not limited thereto. For example, it may be that one first lens or second lens is corresponding to a plurality of pixels, or one pixel includes a plurality of subpixels, and it may be that a plurality of second lenses is corresponding to one first lens, or one second lens is corresponding to a plurality of first lenses, and the like.

It should also be understood that the first lens or the second lens may be a prismatic lens. For example, one prismatic lens may include a plurality of first lenses or second lenses, and one prismatic lens may be corresponding to a row of pixels or a column of pixels, and the embodiments of the present invention set no limit thereto. The first lens or the second lens may be a lens of another type, for example, a round lens, and one lens may be corresponding to one pixel.

It should also be understood that a focal length of a lens may generally be represented by an effective focal length (effective focal length, EFL). For example, the effective focal length may be a distance from a principal point (principal point) to a point of focus (Point of focus) of the lens.

According to this embodiment of the present invention, a focal length of each second lens in the second lens array is less than or equal to a distance between the first lens array and the second lens array.

According to this embodiment of the present invention, the focal length of each second lens in the second lens array is greater than or equal to one half of the distance between the first lens array and the second lens array.

It should be understood that the focal length of each second lens in the second lens array may also meet other conditions. For example, the focal length of each second lens in the second lens array may be greater than or equal to one third or a quarter of the distance between the first lens array and the second lens array, as long as the second lens array can project beams, projected from the pixel array, onto the first lens array.

Alternatively, in another embodiment, the focal length of each second lens in the second lens array may be greater than or equal to a quarter of a distance between the first lens array and the display layer.

According to this embodiment of the present invention, the pixel array includes a plurality of pixels, the first lens array includes a plurality of first lenses, the second lens array includes a plurality of second lenses, the plurality of first lenses is in a one-to-one correspondence with the plurality of pixels, and the plurality of second lenses is in a one-to-one correspondence with the plurality of pixels.

In other words, one lens covers only one pixel. For example, a pixel may be a monochrome pixel, such as a red pixel, a green pixel, or a blue pixel, and the embodiments of the present invention set no limit thereto. The pixel may also be a trichromatic pixel.

According to this embodiment of the present invention, the first lens array is a liquid crystal lens array, the liquid crystal lens array includes a liquid crystal layer and transparent electrodes disposed on two sides of the liquid crystal layer, and the transparent electrodes are configured to control the liquid crystal layer to deflect lights passing through the liquid crystal lens array to different projection directions.

Alternatively, the first lens array may also be made of other crystal materials that can change a refractive index when an electric field is applied. For example, the first lens array may be made of lithium niobate crystal.

According to this embodiment of the present invention, the pixel array includes a plurality of pixels, the first lens array includes a plurality of first lenses, the second lens array includes a plurality of second lenses, the plurality of first lenses is in a one-to-one correspondence with the plurality of pixels, and the plurality of second lenses is in a one-to-one correspondence with the plurality of pixels.

For example, the plurality of second lenses is a microlens array comprising a plurality of microlens. A plurality of liquid crystal lens may be a liquid crystal lens array consisting of micro lenses. Each microlens in the liquid crystal lens array receives only emergent light emitted from a pixel corresponding to the microlens, and does not receive emergent light from adjacent pixels, thereby ensuring expected visual experience of high definition 3D.

According to this embodiment of the present invention, each pixel in the plurality of pixels includes a plurality of subpixels.

In other words, one lens may cover a plurality of subpixels. For example, a pixel may be a trichromatic pixel, and the trichromatic pixel may include a red subpixel, a green subpixel and a blue subpixel.

According to this embodiment of the present invention, a focal length of each liquid crystal lens in the liquid crystal lens array is less than or equal to 50 micrometers.

Such optical repeating (or transfer) design allows flexible configuration of optical matching between a pixel plane and a range of an EFL of the LC microlens array.

The following describes the embodiments of the present invention in detail with reference to specific examples.

FIG. 2 is a schematic structural diagram of a display apparatus 200 according to another embodiment of the present invention. The display apparatus 200 is an example of the display apparatus 100 in FIG. 1. The display apparatus 200 includes a display layer 230, a first lens layer 210, and a second lens layer 220 that are similar to the display layer 130, the first lens layer 110, and the second lens layer 120 in FIG. 1, and details are not described herein.

In this embodiment, the first lens layer 210 includes: a first lens array, a fourth transparent substrate 214, and a first transparent substrate 215. The first lens array is a liquid crystal lens array. The liquid crystal lens array includes a liquid crystal layer 218, a first transparent electrode 216, and a second transparent electrode 217. The first transparent electrode 216 and the second transparent electrode 217 are disposed on two sides of the liquid crystal layer 218, and are configured to control the liquid crystal layer to deflect lights passing through the liquid crystal lens array to different projection directions.

The first transparent substrate 215 is disposed between the first lens array and the second lens layer 220. The fourth transparent substrate 214 may be a front panel or a touchscreen of a terminal in which the display apparatus 200 is located. For example, when the display apparatus is a display apparatus of a mobile terminal, the fourth transparent substrate 214 may be a capacitive touchscreen and front cover glass of the mobile terminal. The first transparent electrode 216 may be disposed on the front panel or the touchscreen, and the second transparent electrode 217 may be disposed on the first transparent substrate 215. The first transparent electrode 216 and the second transparent electrode 217 may be transparent conductive materials, such as indium tin oxide (Indium Tin Oxide, ITO). The first transparent substrate may be a glass substrate, and a thickness thereof may be between 100 mm and 300 mm. Because all transparent substrates of first lens layers in existing terminals are 300 micrometers, the first transparent substrate of this embodiment is also set to 300 micrometers, thereby reducing modifications to the existing terminals.

The second lens layer 220 includes a second lens array. The second lens array may be a microlens array, and includes a plurality of microlenses (Microlens) 221, 222, and 223. For example, the second lens array is a cylindrical lens array. The second lens layer 220 is disposed between the first lens layer 210 and the display layer 230. The second lens array is configured to project beams, emitted from a pixel array, onto the first lens array. For example, the plurality of microlenses 221, 222, and 223 respectively project beams, emitted from a plurality of pixels 231, 232, and 233, onto the liquid crystal lens array, so as to image pixels 211, 212, and 213 respectively. The plurality of microlenses 221, 222, and 223 may be independently disposed on the transparent substrate, or may be integrated with the transparent substrate.

According to this embodiment of the present invention, a microlens may be prepared by using the following processes: (1) photoetching; (2) treatment with a photoresist; (3) reactive ion etching (Reactive Ion Etching, RIE); (4) inkjet printing; and (5) laser marking and embossing. The foregoing preparation processes are conventional technical means, and therefore details are not described herein.

Alternatively, the microlens array of this embodiment of the present invention may be an existing commercial product, for example, fused silica (fused silica) lenses with a refractive index of 1.458 at 589 nm. Because most existing microlens arrays are relatively thick, for example, a thickness thereof is between 0.7 mm and 1.2 mm, an existing microlens array needs to be structuralized and polished so that a thickness thereof falls into a required range (for example, about 200 micrometers). For example, a thick microlens array may be structuralized by means of ultrasonic grinding or sand blasting, and be further polished to reach a thickness, flatness, and roughness required by this embodiment of the present invention. This embodiment of the present invention is not limited thereto, and a chemical etching method may also be used to keep the thickness of the microlens array within a required range.

According to this embodiment of the present invention, the display layer may be configured to display images in a time division manner. For example, images for different projection directions are displayed, where the different projection directions are corresponding to different observation directions. The first lens layer is configured to alternately deflect lights of images for different projection directions to different projection directions according to an applied electric field that changes in a time division manner, so as to present a stereoscopic image that can be seen by naked eyes.

According to this embodiment of the present invention, when an electric field is applied to liquid crystal, a refractive index of the liquid crystal can be changed, and different electric fields may be corresponding to different refractive indexes, that is, the liquid crystal is used to form an electrically tunable prism array at an electro-optic modulation layer. When lights pass through the liquid crystal to which the electric field is applied, a phase difference of emergent light changes with the externally applied electric field.

In addition, in order to enable a resolution of the stereoscopic image presented by the display apparatus to be all pixels, the applied electric field needs to meet a condition that an image of each direction is displayed with all the pixels within duration of visual persistence, thereby improving a resolution of auto-stereoscopic display.

According to this embodiment of the present invention, a layer of liquid crystal lens array may be disposed on a display screen of an existing terminal (for example, a mobile device), and is configured to control directions of light beams (or wave beams) emitted from a display layer, so as to continuously deflect the beams to left and right, thereby enabling a user using the terminal to obtain stereoscopic parallax. Electrically controlled liquid crystal may be used as a material of the liquid crystal lens array, so as to provide a linear phase gradient, and therefore, a beam emitted from each display pixel may be repeatedly deflected to two or more angles in a time domain, thereby forming a naked-eye 3D display mode. Spacing between microlenses of the liquid crystal lens array may be set to be the same as that between pixels of the display layer of the terminal, and therefore, the terminal in the 3D display mode also has a resolution of a 2D display mode. In addition, in this embodiment of the present invention, another layer of microlens array is added between the liquid crystal lens array and the pixels of the display layer, thereby solving problems of crosstalk between the pixels and an effective focal length. The liquid crystal lens array and the microlens array of this embodiment of the present invention may be made as independent structures, so as to be directly integrated above a display of an existing terminal.

According to this embodiment of the present invention, each microlens of the first lens array receives only emergent light from a pixel corresponding to the microlens, and does not receive or seldom receives emergent light from adjacent pixels, thereby ensuring visual experience of high definition 3D.

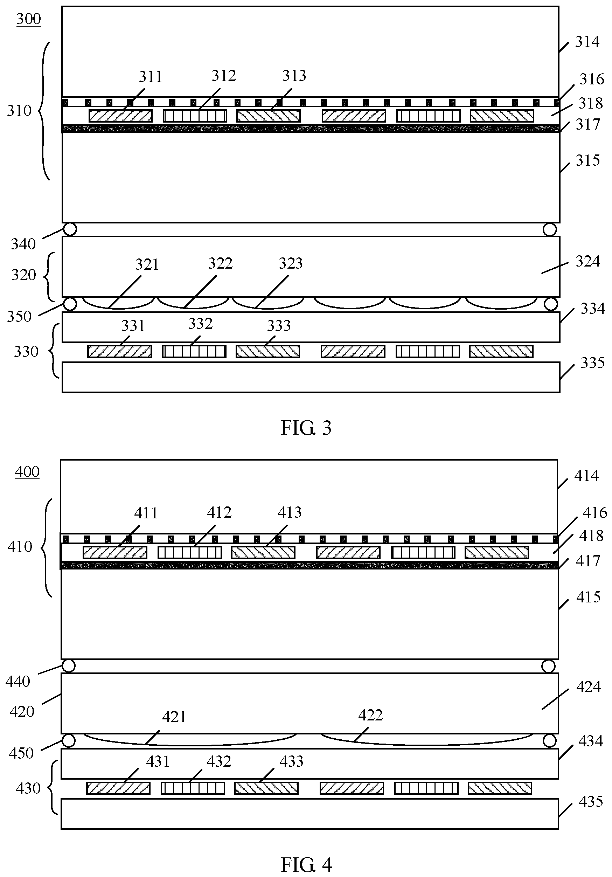

FIG. 3 is a schematic structural diagram of a display apparatus 300 according to another embodiment of the present invention. The display apparatus 300 is an example of the display apparatus 200 in FIG. 2. The display apparatus 300 includes a display layer 330, a first lens layer 310, and a second lens layer 320 that are similar to the display layer 230, the first lens layer 210, and the second lens layer 220 in FIG. 2, and details are not described herein.

In this embodiment, the display layer includes: a pixel array, a second transparent substrate 334, and a fifth transparent substrate 335. The second transparent substrate 334 is disposed between the second lens layer 320 and the pixel array. The pixel array includes pixels 331, 332, and 333.

The first lens layer 310 includes: a first lens array, a fourth transparent substrate 314, and a first transparent substrate 315. The first lens array is a liquid crystal lens array. The liquid crystal lens array includes a liquid crystal layer 318, a first transparent electrode 316, and a second transparent electrode 317. The first transparent electrode 316 and the second transparent electrode 317 are disposed on two sides of the liquid crystal layer 318, and are configured to control the liquid crystal layer to deflect lights passing through the liquid crystal lens array to different projection directions.

The first transparent substrate 315 is disposed between the first lens array and the second lens layer 320. The fourth transparent substrate 314 may be a front panel or a touchscreen of a terminal in which the display apparatus 300 is located. The first transparent electrode 316 may be disposed on the front panel or the touchscreen, and the second transparent electrode 317 may be disposed on the first transparent substrate 315. The first transparent electrode 316 and the second transparent electrode 317 may be transparent conductive materials, such as ITO. The first transparent substrate may be a glass substrate, and a thickness thereof may be between 100 mm and 300 mm.

The second lens layer 320 includes a second lens array and a third transparent substrate 324. The third transparent substrate 324 is disposed between the second lens array and the first transparent substrate 315, and the second lens array is disposed on a side that is of the third transparent substrate 324 and that is opposite to the second lens layer 320. The second lens array may be a microlens array, and includes a plurality of microlenses 321, 322, and 323. The second lens layer 320 is disposed between the first lens layer 310 and the display layer 330. The second lens array is configured to project beams, emitted from the pixel array, onto the first lens array. For example, the plurality ofmicrolenses 321, 322, and 323 respectively project beams, emitted from the plurality of pixels 331, 332, and 333, onto the liquid crystal lens array, so as to image pixels 311, 312, and 313 respectively. For example, the pixels 331, 332, and 333 may be red, green, and blue trichromatic pixels respectively. The plurality of microlenses 321, 322, and 323 may be independently disposed on the third transparent substrate 324, or may be integrated with the third transparent substrate 324. Alternatively, the second lens array may be a cylindrical lens array.

In this embodiment, the display apparatus 300 further includes: a first spacer element 340 and a second spacer element. The first spacer element 340 is disposed between the first transparent substrate 315 and the third transparent substrate 324, and is configured to form a gap between the first transparent substrate 315 and the second lens layer 320. The second spacer element 350 is disposed between the second transparent substrate 334 and the third transparent substrate 324, and is configured to form a gap between the second transparent substrate 334 and the second lens layer 320. For example, the first spacer element 340 and the second spacer element may be optical glue or spacers (spacers). A size of the spacer or a thickness of the optical glue may be several micrometers. The gap may be filled with air. Because a refractive index of the microlens array is different from a refractive index of the air, the microlens possesses a focusing capability. Alternatively, the gap may be filled with another medium (for example, a gas with a refractive index of about 1).

In this embodiment, a thickness of the first transparent substrate 315 may be 300 micrometers, a thickness of the second lens layer 320 may be 225 micrometers, and a thickness of the second transparent substrate 334 may be 100 micrometers. Because a thickness of a display layer and a thickness of a transparent substrate of a first lens layer in an existing terminal are both 300 micrometers, the thickness of the first transparent substrate of this embodiment is set to 300 micrometers, the thickness of the second lens layer 320 is set to 225 micrometers, and the thickness of the second transparent substrate 334 is set to 100 micrometers, which can reduce modifications to the existing terminal, and does not significantly increase a thickness of the terminal.

FIG. 4 is a schematic structural diagram of a display apparatus 400 according to still another embodiment of the present invention. The display apparatus 400 is an example of the display apparatus 200 in FIG. 2. The display apparatus 400 includes a display layer 430, a first lens layer 410, and a second lens layer 420 that are similar to the display layer 230, the first lens layer 210, and the second lens layer 220 in FIG. 2, and details are not described herein.

In this embodiment, the display layer includes: a pixel array, a second transparent substrate 434, and a fifth transparent substrate 435. The second transparent substrate 434 is disposed between the second lens layer 420 and the pixel array. The pixel array includes pixels 431, 432, and 433.

The first lens layer 410 includes: a first lens array, a fourth transparent substrate 414, and a first transparent substrate 415. The first lens array is a liquid crystal lens array. The liquid crystal lens array includes a liquid crystal layer 418, a first transparent electrode 416, and a second transparent electrode 417. The first transparent electrode 416 and the second transparent electrode 417 are disposed on two sides of the liquid crystal layer 418, and are configured to control the liquid crystal layer to deflect lights passing through the liquid crystal lens array to different projection directions.

The first transparent substrate 415 is disposed between the first lens array and the second lens layer 420. The fourth transparent substrate 414 may be a front panel or a touchscreen of a terminal in which the display apparatus 400 is located. The first transparent electrode 416 may be disposed on the front panel or the touchscreen, and the second transparent electrode 417 may be disposed on the first transparent substrate 415. The first transparent electrode 416 and the second transparent electrode 417 may be transparent conductive materials, such as ITO. The first transparent substrate may be a glass substrate, and a thickness thereof may be between 100 mm and 300 mm.

The second lens layer 420 includes a second lens array and a third transparent substrate 424. The third transparent substrate 424 is disposed between the second lens array and the first transparent substrate 415, and the second lens array is disposed on a side that is of the third transparent substrate 424 and that is opposite to the second lens layer 420. The second lens array may be a microlens array, and includes a plurality of micro lenses 421 and 422. The second lens layer 420 is disposed between the first lens layer 410 and the display layer 430. The second lens array is configured to project beams, emitted from the pixel array, onto the first lens array. For example, the microlens 421 projects beams, emitted from the plurality of pixels 431, 432, and 433, onto the liquid crystal lens array, so as to image pixels 411, 412, and 413 respectively. For example, the pixels 431, 432, and 433 may be red, green, and blue trichromatic pixels respectively. The plurality of micro lenses 421, 422, and 423 may be independently disposed on the third transparent substrate 424, or may be integrated with the third transparent substrate 424. Alternatively, the second lens array may be a cylindrical lens array. Different from the embodiment in FIG. 3, each second lens is corresponding to a plurality of pixels. In this technical solution, a quantity of second lenses is reduced, and therefore, a manufacturing process is simpler.

In this embodiment, the display apparatus 400 further includes: a first spacer element 440 and a second spacer element. The first spacer element 440 is disposed between the first transparent substrate 415 and the third transparent substrate 424, and is configured to form a gap between the first transparent substrate 415 and the second lens layer 420. The second spacer element 450 is disposed between the second transparent substrate 434 and the third transparent substrate 424, and is configured to form a gap between the second transparent substrate 434 and the second lens layer 420. The first spacer element 440 and the second spacer element may be optical glue or spacers. For example, the transparent substrates may be bound by using a polymer pad or the spacer. A diameter of the spacer or a thickness of the polymer pad may be several micrometers. It should be understood that the gap may be filled with air or another gas.

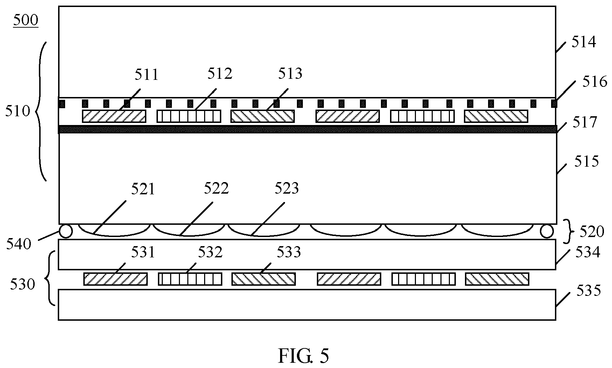

FIG. 5 is a schematic structural diagram of a display apparatus 500 according to still another embodiment of the present invention. The display apparatus 500 is an example of the display apparatus 200 in FIG. 2, and the display apparatus 500 includes a display layer 530, a first lens layer 510, and a second lens layer 520 that are similar to the display layer 230, the first lens layer 210, and the second lens layer 220 in FIG. 2, and details are not described herein.

In this embodiment, the display layer 530 includes: a pixel array, a second transparent substrate 534, and a fifth transparent substrate 535. The second transparent substrate 534 is disposed between the second lens layer 520 and the pixel array. The pixel array includes pixels 531, 532, and 533.

The first lens layer 510 includes: a first lens array, a fourth transparent substrate 514, and a first transparent substrate 515. The first lens array is a liquid crystal lens array. The liquid crystal lens array includes a liquid crystal layer 518, a first transparent electrode 516, and a second transparent electrode 517. The first transparent electrode 516 and the second transparent electrode 517 are disposed on two sides of the liquid crystal layer 518, and are configured to control the liquid crystal layer to deflect lights passing through the liquid crystal lens array to different projection directions.

The first transparent substrate 515 is disposed between the first lens array and the second lens layer 520. The fourth transparent substrate 514 may be a front panel or a touchscreen of a terminal in which the display apparatus 500 is located. The first transparent electrode 516 may be disposed on the front panel or the touchscreen, and the second transparent electrode 517 may be disposed on the first transparent substrate 515. The first transparent electrode 516 and the second transparent electrode 517 may be transparent conductive materials, such as ITO. The first transparent substrate may be a glass substrate, and a thickness thereof may be between 100 mm and 300 mm.

The second lens layer 520 includes a second lens array. The second lens array is disposed on a side that is of the first transparent substrate 515 and that is opposite to the second lens layer 520. The second lens array may be a micro lens array, and includes a plurality of microlenses 521, 522, and 523. The second lens layer 520 is disposed between the first lens layer 510 and the display layer 530. The second lens array is configured to project beams, emitted from the pixel array, onto the first lens array. For example, the microlenses 521, 522, and 523 project beams, emitted from the plurality of pixels 531, 532, and 533, onto the liquid crystal lens array, so as to image pixels 511, 512, and 513 respectively. For example, pixels 531, 532, and 533 may be red, green, and blue trichromatic pixels respectively. Different from the embodiment in FIG. 3, the second lens is directly disposed (for example, printed) on the first transparent substrate. A manufacturing process of this solution is simple, and does not significantly increase a thickness of an existing terminal.

The display apparatus 500 further includes: a first spacer element 540 disposed between the first transparent substrate 515 and the second transparent substrate 534 and configured to form a gap between the second transparent substrate 534 and the second lens layer 520. In other words, the first spacer element 540 is configured to form a gap between the second transparent substrate 534 and the second lens array.

In this embodiment, a thickness of the first transparent substrate 515 may be 300 micrometers, and a thickness of the second transparent substrate 534 may be 300 micrometers. Because a thickness of a display layer and a thickness of a transparent substrate of a first lens layer in an existing terminal are both 300 micrometers, the thickness of the first transparent substrate and the thickness of the second transparent substrate of this embodiment are also set to 300 micrometers, which can reduce modifications to the existing terminal.

Alternatively, the thickness of the second transparent substrate 534 may also be 100 micrometers.

Another embodiment of the present invention provides a terminal, including: the display apparatuses according to the embodiments of FIG. 1 to FIG. 5.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A display apparatus, comprising:
a display layer, comprising a pixel array;
a first lens layer, comprising a first lens array, wherein the first lens array is configured to deflect lights passing through the first lens array to different projection directions, so as to achieve stereoscopic parallax; and
a second lens layer, comprising a second lens array, wherein the second lens layer is disposed between the first lens layer and the display layer, and the second lens array is configured to project beams, emitted from the pixel array, onto the first lens array or within a focal length of the first lens array.

2. The display apparatus according to claim 1, wherein a focal length of each second lens in the second lens array is less than a distance between the first lens array and the second lens array.

3. The display apparatus according to claim 1 or 2, wherein the focal length of each second lens in the second lens array is greater than or equal to one half of the distance between the first lens array and the second lens array; or the focal length of each second lens in the second lens array is greater than or equal to a quarter of a distance between the first lens array and the display layer.

4. The display apparatus according to any one of claims 1 to 3, wherein the first lens array is a liquid crystal lens array, the liquid crystal lens array comprises a liquid crystal layer and transparent electrodes disposed on two sides of the liquid crystal layer, and the transparent electrodes are configured to control the liquid crystal layer to deflect lights passing through the liquid crystal lens array to different projection directions.

5. The display apparatus according to any one of claims 1 to 4, wherein the pixel array comprises a plurality of pixels, the first lens array comprises a plurality of first lenses, the second lens array comprises a plurality of second lenses, the plurality of first lenses is in a one-to-one correspondence with the plurality of pixels, and the plurality of second lenses is in a one-to-one correspondence with the plurality of pixels.

6. The display apparatus according to claim 5, wherein each pixel of the plurality of pixels comprises a plurality of subpixels.

7. The display apparatus according to any one of claims 1 to 6, wherein the first lens layer further comprises: a first transparent substrate disposed between the first lens array and the second lens layer, and the display layer further comprises: a second transparent substrate disposed between the second lens layer and the pixel array.

8. The display apparatus according to claim 7, wherein the second lens layer further comprises a third transparent substrate, the third transparent substrate is disposed between the second lens array and the first transparent substrate, the second lens array is disposed on a side that is of the third transparent substrate and that is opposite to the second lens layer, and the display apparatus further comprises:
a first spacer element, disposed between the first transparent substrate and the third transparent substrate and configured to form a gap between the first transparent substrate and the second lens layer; and
a second spacer element, disposed between the second transparent substrate and the third transparent substrate and configured to form a gap between the second transparent substrate and the second lens layer.

9. The display apparatus according to claim 8, wherein a thickness of the first transparent substrate is 300 micrometers, a thickness of the second lens layer is 225 micrometers, and a thickness of the second transparent substrate is 100 micrometers.

10. The display apparatus according to claim 7, wherein the second lens array is disposed on a side that is of the first transparent substrate and that is opposite to the second lens layer, and the display apparatus further comprises:
a first spacer element, disposed between the first transparent substrate and the second transparent substrate and configured to form a gap between the second transparent substrate and the second lens layer.

11. The display apparatus according to claim 10, wherein a thickness of the first transparent substrate is 300 micrometers, and a thickness of the second transparent substrate is 300 micrometers.

12. The display apparatus according to claim 7, wherein the second lens array is a cylindrical lens array.

13. The display apparatus according to claim 12, wherein a thickness of the first transparent substrate is 300 micrometers, a thickness of the second lens layer is 225 micrometers, and a thickness of the second transparent substrate is 100 micrometers.

14. A terminal, comprising the display apparatus according to any one of claims 1 to 13.
